# EUROPÄISCHE PATENTANMELDUNG

(11) **EP 3 944 949 A1**
(43) Veröffentlichungstag der Anmeldung: **02.02.2022**
(21) Anmeldenummer: 21186281.8
(22) Anmeldetag: 19.07.2021
(51) Int. Cl.: B29C 48/275, B29B 17/00, B29C 48/21, B29C 48/09, B29C 49/42, B29C 49/22, B29C 48/025, B29C 49/04

(54) **VERFAHREN UND ANLAGE ZUM HERSTELLEN VON KRAFTSTOFFTANKS**

(30) Priorität: 29.07.2020 DE 102020209556
(71) Anmelder: VOLKSWAGEN AG, 38440 Wolfsburg (DE)
(72) Erfinder: Mientkewitz, Claudia, 30952 Ronnenberg (DE); Berlin, Ralf, 39638 OT Wiepke / Gardelegen (DE)

(57) **Zusammenfassung**

Die Erfindung betrifft ein Verfahren zum Herstellen von Kraftstofftanks (100), insbesondere umfassend mehrlagige Tanks (101) und einlagige Tanks (102),
aufweisend folgende Schritte:
1) Co-Extrudieren eines mehrschichtigen Materials (M1) für mindestens einen mehrlagigen Tank (101) in einer Co-Extrusionsanlage (Coex),
2) Formen des mindestens einen mehrlagigen Tanks (101) aus dem mehrschichtigen Material (M1) in einem ersten Formwerkzeug (F1) der Co-Extrusionsanlage (Coex),
3) Bereitstellen eines Abfallmaterials (A) aus dem mehrschichtigen Material (M1) der Co-Extrusionsanlage (Coex) an eine Mono-Extrusionsanlage (Mono) zum Extrudieren eines einschichtigen Materials (M2) für mindestens einen einlagigen Tank (102).

## Beschreibung

Die Erfindung betrifft ein Verfahren zum Herstellen von Kraftstofftanks nach dem unabhängigen Verfahrensanspruch, eine Verwendung eines Abfallmaterials einer Co-Extrusionsanlage nach dem unabhängigen Verwendungsanspruch und eine Anlage zum Durchführen eines entsprechenden Verfahrens nach dem unabhängigen Vorrichtungsanspruch.

Kraftstofftanks, bspw. Benzintanks, für Fahrzeuge sind grundsätzlich bekannt. Oft werden Benzintanks aus einem mehrschichtigen Material ausgeformt und somit mehrlagig ausgebildet. Bei der Herstellung von solchen Kraftstofftanks, bspw. Benzintanks, fällt relativ viel Abfallmaterial an. Dieses Abfallmaterial kann nur begrenzt bei der Herstellung dergleichen Kraftstofftanks wiederverwendet werden. Über 50% vom Abfallmaterial wird zumeist entsorgt. Verfahren zum Herstellen von Kraftstofftanks sind bspw. aus den Druckschriften DE 696 18 272 T2 und DE 10 2004 009 365 A1 bekannt.

Der Erfindung liegt daher die Aufgabe zugrunde, ein verbessertes Verfahren zum Herstellen von Kraftstofftanks bereitzustellen. Insbesondere ist es die Aufgabe der Erfindung, ein Verfahren zum Herstellen von Kraftstofftanks bereitzustellen, welches die Entsorgung vom unverwertbaren Abfallmaterial reduziert und nahezu verhindert. Ferner ist es die Aufgabe der Erfindung, ein Verfahren zum Herstellen von Kraftstofftanks bereitzustellen, welches eine verbesserte Aufbereitung und/oder Wiederverwendung vom Abfallmaterial von mehrlagigen Kraftstofftanks ermöglicht. Zudem ist es die Aufgabe der Erfindung, eine vorteilhafte Verwendung eines Abfallmaterials einer Co-Extrusionsanlage zu ermöglichen und eine Anlage zum Herstellen von Kraftstofftanks bereitzustellen, welche speziell dazu ausgeführt ist, ein entsprechendes Verfahren gemäß der Erfindung durchzuführen.

Die erfindungsgemäße Aufgabe wird gelöst durch ein verbessertes Verfahren zum Herstellen von Kraftstofftanks, insbesondere von mehrlagigen Tanks und einlagigen Tanks, mit den Merkmalen des unabhängigen Verfahrensanspruches. Zudem wird die erfindungsgemäße Aufgabe gelöst durch eine Verwendung eines Abfallmaterials einer Co-Extrusionsanlage mit den Merkmalen des unabhängigen Verwendungsanspruches und eine Anlage zum Herstellen von Kraftstofftanks mit den Merkmalen des unabhängigen Vorrichtungsanspruches. Dabei gelten Merkmale, die im Zusammenhang mit einzelnen Ausführungsformen sowie Aspekten der Erfindung beschrieben sind, selbstverständlich auch im Zusammenhang mit den anderen Ausführungsformen sowie Aspekten der Erfindung und jeweils umgekehrt, sodass bezüglich der Offenbarung zu den einzelnen Ausführungsformen sowie Aspekten der Erfindung stets wechselseitig Bezug genommen wird bzw. werden kann.

Die Erfindung stellt ein Verfahren zum Herstellen von Kraftstofftanks, insbesondere umfassend mehrlagige Tanks und einlagige Tanks, bereit, aufweisend folgende Schritte:
1) Co-Extrudieren eines mehrschichtigen Materials für mindestens einen mehrlagigen Tank in einer Co-Extrusionsanlage,
2) Formen des mindestens einen mehrlagigen Tanks aus dem mehrschichtigen Material in einem ersten Formwerkzeug der Co-Extrusionsanlage,
3) Bereitstellen (zumindest eines Teils) eines Abfallmaterials aus dem mehrschichtigen Material der Co-Extrusionsanlage (der bspw. innerhalb der Co-Extrusionsanlage selbst nicht verwertbar ist) an eine Mono-Extrusionsanlage zum Extrudieren eines einschichtigen Materials für mindestens einen einlagigen Tank.

Kraftstofftanks im Sinne der Erfindung können im Nachfolgenden einfach als Tanks bezeichnet werden.

Die mehrlagigen Tanks im Sinne der Erfindung können vorteilhafterweise zur Speicherung von Kohlenwasserstoff-Kraftstoffen, wie z. B. Benzin, verwendet werden. Solche Tanks umfassen zumeist mehrere Lagen, wobei zumindest eine Lage von den mehreren Lagen als eine Sperrlage für den flüchtigen Kohlenwasserstoff ausgeführt sein kann.

Die einlagigen Tanks im Sinne der Erfindung können vorteilhafterweise zur Speicherung von Kohlenwasserstoff-Kraftstoffen, wie z. B. Diesel, verwendet werden.

Das Abfallmaterial entsteht im Sinne der Erfindung durch Zuschneiden, Abtrennen und/oder Abreißen der Kraftstofftanks (oder kurz ausgedrückt Tanks) in oder außerhalb von den Formwerkzeugen der Co-Extrusionsanlage und der Mono-Extrusionsanlage, mit oder ohne separate Werkzeuge (bspw. zum Entbutzen), und/oder durch fehlerhafte Tanks. Die Formwerkzeuge können bspw. als Blasformwerkzeuge bzw. Blaswerkzeuge ausgebildet sein.

Der erfindungsgemäße Gedanke liegt dabei darin, den Teil des Abfallmaterials aus dem mehrschichtigen Material der Co-Extrusionsanlage, der in der Co-Extrusionsanlage selbst nicht verwertet bzw. wiederverwendet werden kann, der Mono-Extrusionsanlage zuzuführen, um daraus Dieseltanks aus einem bis zu 100% recycelbaren Coextrusions-Regranulat zu fertigen. Dabei ist es lediglich denkbar, dass dem Coextrusions-Regranulat in der Mono-Extrusionsanlage geringe Mengen an Neumaterial hinzugefügt werden können. Auf diese Weise werden die abfallenden Zuschnitte aus dem ersten Formwerkzeug der Co-Extrusionsanlage innerhalb derselben gemeinsamen Anlage (mit der Co-Extrusionsanlage und der Mono-Extrusionsanlage) für mehrlagige und einlagige Tanks stofflich vollständig recycelt. Außerdem kann dadurch der Bedarf an Neumaterial gesenkt und/oder das Neumaterial eingespart werden. Vorteilhafterweise wird mithilfe der Erfindung ermöglicht, den Verbrauch von erdölbasierten Kunststoffen, die zur Herstellung von Kraftstofftanks verwendet werden, zu reduzieren und damit die CO2-Bilanz bei der Herstellung von mehrlagigen Tanks und einlagigen Tanks zu verbessern.

Somit stellt die Erfindung ein Verfahren zum Herstellen von Kraftstofftanks bereit, welches die Entsorgung vom unverwertbaren Abfallmaterial reduziert und nahezu verhindert, und welches eine verbesserte Aufbereitung und/oder Wiederverwendung des Abfallmaterials von mehrlagigen Kraftstofftanks ermöglicht.

Ferner kann die Erfindung bei einem Verfahren zum Herstellen von Kraftstofftanks vorsehen, dass im Schritt 1) das mehrschichtige Material folgende Schichten aufweist:
a1) eine erste polyethylenhaltige Basisschicht, die insbesondere Polyethylen hoher Dichte aufweist,
a2) eine erste Haftvermittlerschicht, die insbesondere Polyethylen, vorzugsweise einen gepfropften Polyethylen, aufweist,
a3) eine Sperrschicht, insbesondere umfassend Ethylen-Vinylalkohol-Copolymer und/oder Polyamid und/oder Polyethylen,
a4) eine zweite Haftvermittlerschicht, die insbesondere Polyethylen, vorzugsweise einen gepfropften Polyethylen, aufweist, und/oder
a5) eine zweite polyethylenhaltige Basisschicht, die insbesondere Polyethylen hoher Dichte aufweist.

Die Basisschichten können dabei vorzugsweise dazu dienen, um einen stabilen Tank bereitzustellen. Dabei ist es denkbar, dass die Basisschichten 90 bis 95 Gewichtsprozent des mehrschichtigen Materials ergeben können. Die Haftvermittlerschichten können ebenfalls als Bindemittelschichten bezeichnet werden, die vorzugsweise zur Haftung bzw. Bindung zwischen der jeweiligen Basisschicht und der Sperrschicht dienen können. Zudem können die Haftvermittlerschichten speziell dazu ausgebildet sein, um Schereffekte zwischen der jeweiligen Basisschicht und der Sperrschicht zu reduzieren und vorzugsweise zu vermeiden. Ferner können die Haftvermittlerschichten mit einer im Wesentlichen temperaturstabilen Viskosität in dem zugeordneten Temperaturbereich der Co-Extrusion ausgebildet sein, insbesondere zwischen 150°C und 230°C, bspw. zwischen 190°C und 220°C. Die Haftvermittlerschichten können bspw. 1 bis 3 Gewichtsprozent des mehrschichtigen Materials ergeben. Die Sperrschicht kann bspw. auf Basis von Ethylen-Vinylalkohol-Copolymer oder auf Basis von Polyamid ausgebildet sein. Die Sperrschicht dient vorteilhafterweise dazu, dass der flüchtige Kohlenwasserstoff nicht aus dem Tank in die Umgebung entweichen kann. Die Sperrschicht kann bspw. 1 bis 3 Gewichtsprozent des mehrschichtigen Materials ergeben.

Im Rahmen der Erfindung ist es weiterhin denkbar, dass das mehrschichtige Material nur die Schichten a1) bis a3) aufweisen kann, wobei insbesondere die Sperrschicht an einer Innenseite des mehrlagigen Tanks angeordnet werden kann bzw. dem Kraftstoff ausgesetzt sein kann. Somit kann ein mehrschichtiges Material mit einer vereinfachten Schichtbildung und ggf. mit einem reduzierten Gewicht bereitgestellt werden.

Des Weiteren ist es im Rahmen der Erfindung denkbar, dass der mehrlagige Tank insgesamt eine Materialstärke bzw. Dicke von 2 mm bis 10 mm, vorzugsweise 3 mm bis 6 mm, aufweisen kann. Somit kann ein leichter und einfacher in Handhabung Tank bereitgestellt werden.

Zudem kann die Erfindung bei einem Verfahren zum Herstellen von Kraftstofftanks vorsehen, dass einem Neumaterial der Schicht a1) und/oder einem Neumaterial der Schicht a5) das Abfallmaterial aus dem mehrschichtigen Material der Co-Extrusionsanlage beigemischt wird. Mit anderen Worten kann dem Neumaterial der Basisschichten das Abfallmaterial beigemischt werden. Somit kann die Wiederverwendung des Teils des Abfallmaterials bzw. des Teils der angefallenen Zuschnitte des mehrschichtigen Materials aus dem ersten Formwerkzeug bereits in der Co-Extrusionsanlage erhöht werden.

Außerdem kann die Erfindung bei einem Verfahren zum Herstellen von Kraftstofftanks vorsehen, dass zwischen der Schicht a1) und der Schicht a2) und/oder zwischen der Schicht a4) und der Schicht a5) mindestens eine weitere Schicht gebildet wird:
a*) eine Coextrusions-Regranulat-Schicht, die insbesondere das Abfallmaterial aus dem mehrschichtigen Material der Co-Extrusionsanlage aufweist.

Auf diese Weise kann das Abfallmaterial als eine separate und/oder zusätzliche Schicht in dem mehrschichtigen Material eingebunden bzw. integriert werden. Auch somit kann die Wiederverwendung des Teils des Abfallmaterials bzw. des Teils der angefallenen Zuschnitte des mehrschichtigen Materials aus dem ersten Formwerkzeug bereits in der Co-Extrusionsanlage erhöht werden. Dabei ist es insbesondere denkbar, dass zwischen der Schicht a1) und der Schicht a2), wie auch zwischen der Schicht a4) und der Schicht a5) jeweils eine solche Coextrusions-Regranulat-Schicht eingebunden bzw. integriert werden kann.

Ferner kann die Erfindung bei einem Verfahren zum Herstellen von Kraftstofftanks vorsehen, dass das Abfallmaterial im Schritt 3) in Form eines Coextrusions-Regranulats bereitgestellt wird, und/oder dass das Abfallmaterial im Schritt 3) zerkleinert, geschreddert, geschnitten, gerissen, granuliert, gemahlen und/oder durch einen separaten Extrusionsprozess aufbereitet wird. Auf diese Weise kann die Wiederverwendung des Abfallmaterials des mehrschichtigen Materials bei den Extrusionsprozessen ermöglicht werden. Das Zerkleinern des Abfallmaterials zum Coextrusions-Regranulat kann bspw. mithilfe einer Pressmaschine und eines Siebs und/oder mithilfe einer zusätzlichen Extrusionsschnecke erfolgen, die bspw. der Extrusionsschnecke der Co-Extrusionsanlage vorgeschaltet werden kann.

Weiterhin kann die Erfindung bei einem Verfahren zum Herstellen von Kraftstofftanks vorsehen, dass das Abfallmaterial im Schritt 3) in einem Auffangbehälter (bspw. Silo, BigPack, Container) aufbewahrt und nach Bedarf der Co-Extrusionsanlage und/oder der Mono-Extrusionsanlage zugeführt wird. Auf diese Weise kann das erfindungsgemäße Verfahren flexibel und zielgerichtet durchgeführt werden. Der Auffangbehälter kann bspw. ein Teil einer Pressmaschine zum Zerkleinern des Abfallmaterials zum Coextrusions-Regranulat bilden.

Des Weiteren kann die Erfindung bei einem Verfahren zum Herstellen von Kraftstofftanks vorsehen, dass das Abfallmaterial im Schritt 3) auf einem Wiederaufbereitungsband, durch Rohrleitungen, durch ein mechanisches und/oder pneumatisches Fördersystem, und/oder durch Transportfahrzeuge wieder der Co-Extrusionsanlage bereitgestellt wird, um das Abfallmaterial zumindest zu einem Teil in der Co-Extrusionsanlage wiederverwenden zu können. Auf diese Weise kann ein geschlossener Fließbandprozess innerhalb der Co-Extrusionsanlage mit der Möglichkeit der Wiederverwendung des Abfallmaterials bzw. der angefallenen Zuschnitte des mehrschichtigen Materials geschaffen werden.

Zudem kann die Erfindung bei einem Verfahren zum Herstellen von Kraftstofftanks vorsehen, dass das Abfallmaterial im Schritt 3) auf einem Fließband, durch Rohrleitungen, durch ein spezielles mechanisches und/oder pneumatisches Fördersystem und/oder durch Transportfahrzeuge der Mono-Extrusionsanlage bereitgestellt wird, welches die Co-Extrusionsanlage und die Mono-Extrusionsanlage produktionstechnisch verbindet, um insbesondere einen fließenden Herstellungsprozess von mehrlagigen Tanks und einlagigen Tanks zu ermöglichen. Auf diese Weise kann ein gemeinsamer Fließbandprozess in der Co-Extrusionsanlage und in der Mono-Extrusionsanlage geschaffen werden, um innerhalb der gemeinsamen Anlage die mehrlagigen Tanks und die einlagigen Tanks bereitstellen zu können. Auf diese Weise kann die Wiederverwendung des Abfallmaterials bzw. der angefallenen Zuschnitte des mehrschichtigen Materials aus dem ersten Formwerkzeug der Co-Extrusionsanlage in der Mono-Extrusionsanlage sichergestellt werden.

Außerdem kann die Erfindung bei einem Verfahren zum Herstellen von Kraftstofftanks vorsehen, dass das Verfahren mindestens einen von den folgenden Schritten aufweist:
4) Extrudieren eines einschichtigen Materials für mindestens einen einlagigen Tank in der Mono-Extrusionsanlage, zumindest zu einem Teil oder zu 100 % aus dem Abfallmaterial (in Form des mehrschichtigen Materials) der Co-Extrusionsanlage,
5) Formen des mindestens einen einlagigen Tanks aus dem einschichtigen Material in einem zweiten Formwerkzeug der Mono-Extrusionsanlage, und/oder
6) Wiederverwenden eines Abfallmaterials aus dem einschichtigen Material in der Mono-Extrusionsanlage zum Extrudieren des einschichtigen Materials für den mindestens einen einlagigen Tank.

Auf diese Weise kann die Herstellung der einlagigen Tanks in der Mono-Extrusionsanlage und auch dort die Wiederverwendung des Abfallmaterials bzw. der angefallenen Zuschnitte des einschichtigen Materials ermöglicht werden. Das einschichtige Material kann dabei Neumaterial und/oder das Abfallmaterial aus dem mehrschichtigen Material der Co-Extrusionsanlage gemäß dem Schritt 3) umfassen.

Zudem wird die erfindungsgemäße Aufgabe durch eine Verwendung eines Abfallmaterials aus einem mehrschichtigen Material einer Co-Extrusionsanlage, welches zum Herstellen von mindestens einem mehrlagigen Tank genutzt wird, in einer Mono-Extrusionsanlage zum Extrudieren eines einschichtigen Materials, welches zum Herstellen von mindestens einem einlagigen Tank genutzt wird.

Ferner wird die erfindungsgemäße Aufgabe durch eine Anlage zum Herstellen von Kraftstofftanks, insbesondere umfassend mehrlagige Tanks und einlagige Tanks, gelöst, aufweisend: eine Co-Extrusionsanlage zum Co-Extrudieren eines mehrschichtigen Materials für mindestens einen mehrlagigen Tank und eine Mono-Extrusionsanlage zum Extrudieren eines einschichtigen Materials für mindestens einen einlagigen Tank, wobei die Co-Extrusionsanlage und die Mono-Extrusionsanlage produktionstechnisch, insbesondere durch ein Fließband, durch Rohrleitungen, durch ein spezielles Fördersystem (mechanisch, pneumatisch) und/oder durch Transportfahrzeuge miteinander verbunden und derart ausgebildet sind, um ein Verfahren durchzuführen, welches wie oben beschrieben ablaufen kann. Mithilfe der erfindungsgemäßen Anlage werden die gleichen Vorteile erreicht, die oben im Zusammenhang mit dem erfindungsgemäßen Verfahren beschrieben wurden. Auf diese Vorteile wird vorliegend vollumfänglich Bezug genommen.

Weiterhin wird die Erfindung anhand der Figuren näher dargestellt. Dabei ist zu beachten, dass die Figuren nur einen beschreibenden Charakter haben und nicht dazu gedacht sind, die Erfindung in irgendeiner Form einzuschränken.

### Es zeigen:

- Fig. 1: eine beispielhafte Darstellung eines einschichtigen Materials und eines mehrschichtigen Materials im Sinne der Erfindung,
- Fig. 2: eine beispielhafte Darstellung einer Co-Extrusionsanlage im Sinne der Erfindung, und
- Fig. 3: eine beispielhafte Darstellung einer Anlage im Sinne der Erfindung, umfassend eine Co-Extrusionsanlage und eine Mono-Extrusionsanlage.

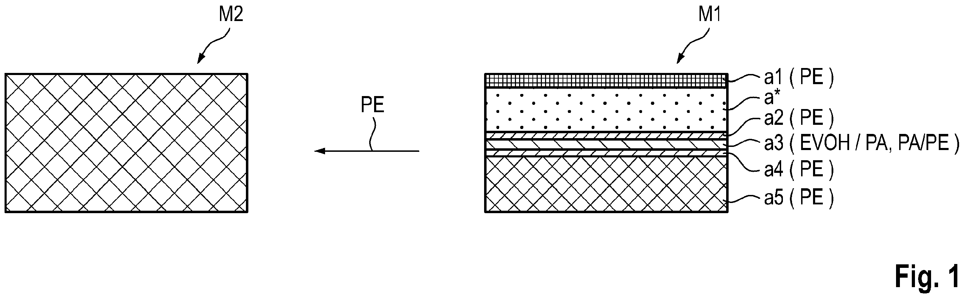

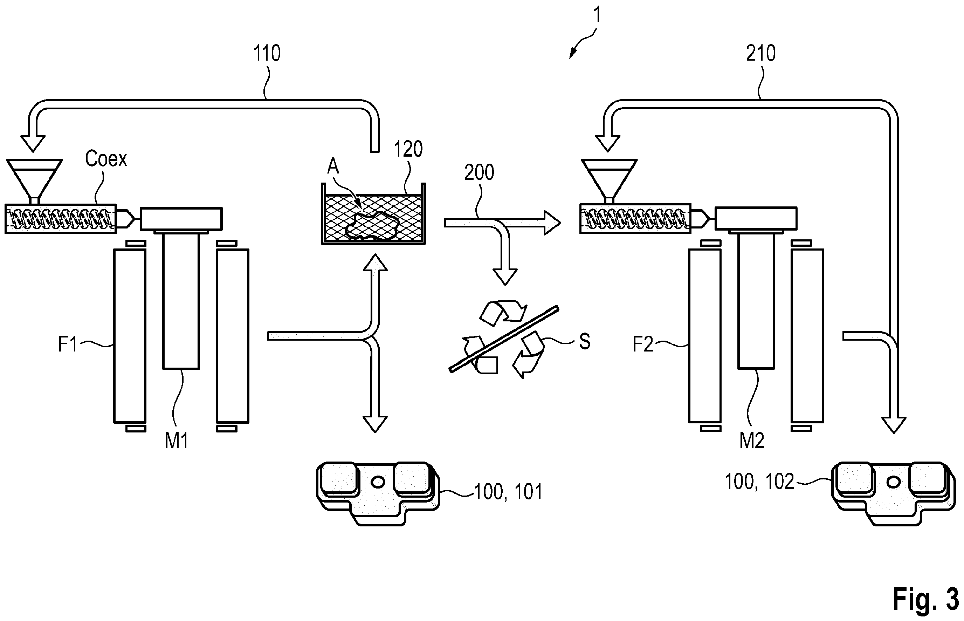

Die Figur 1 zeigt auf der linken Seite ein beispielhaftes einschichtiges Material M2, aus welchem einlagige Tanks 102, insbesondere Diesel-Tanks, mithilfe eines zweiten Formwerkzeuges F2 in einer Mono-Extrusionsanlage Mono ausgeformt werden können. Ein beispielhafter einlagiger Tank 102 wird im Weiteren in der Figur 3 gezeigt. Auf der rechten Seite der Figur 1 ist ein beispielhaftes mehrschichtiges Material M1 gezeigt, aus welchem mehrlagige Tanks 101, insbesondere Benzin-Tanks, mithilfe eines ersten Formwerkzeuges F1 in einer Co-Extrusionsanlage Coex ausgeformt werden können.

Das mehrschichtige Material M1 für die mehrlagigen Tanks 101, wie z. B. Benzin-Tanks, können bspw. 6 Schichten a1, a2, a3, a4, a5, a* aufweisen, auf die im Nachfolgenden noch in Verbindung mit der Figur 3 im Detail eingegangen wird.

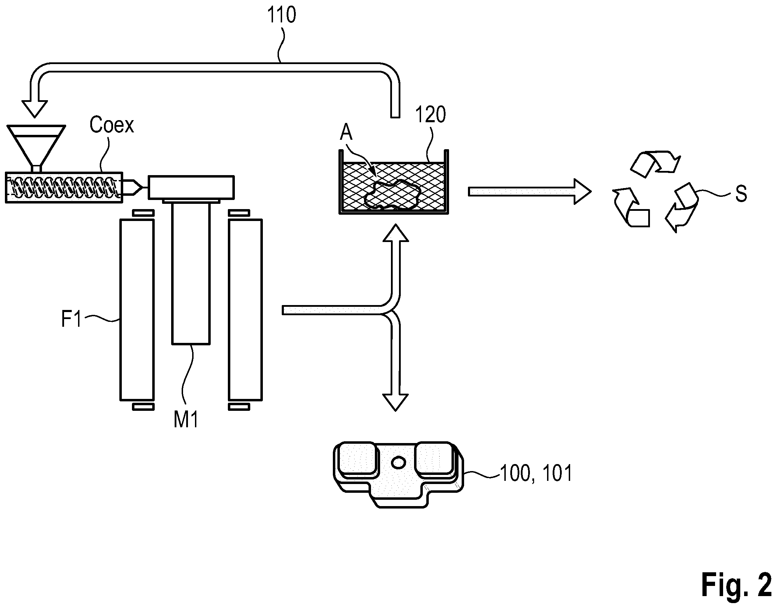

In der Fertigung von Kunststoffkraftstoffbehältern können Tanks im Blasformverfahren produziert werden, wie dies die Figur 2 schematisch zeigt. Das Blasformverfahren wird mithilfe einer Co-Extrusionsanlage Coex durchgeführt. In der Co-Extrusionsanlage Coex wird ein mehrschichtiges Material M1 blasgeformt. Das mehrschichtige Material M1 wird dabei in Form eines Schlauches extrudiert. Der Schlauch wird anschließend einem ersten Formwerkzeug F1 bereitgestellt. Schließlich wird in dem ersten Formwerkzeug F1 der fertige mehrlagige Tank 101 ausgeformt (insbesondere blasgeformt). Dabei entstehen jedoch Zuschnitte, die bei solchen Blasprozessen bisher bis zu ca. 50% ausgesondert und entsorgt werden mussten, bspw. an einen Schrottplatz S.

Die Erfindung wird mithilfe der Figur 3 erklärt. Die Erfindung sieht ein Verfahren zum Herstellen von Kraftstofftanks 100 (oder einfach ausgedrückt Tanks 100), insbesondere umfassend eine Mehrzahl an mehrlagigen Tanks 101 und eine Mehrzahl an einlagigen Tanks 102, vor, aufweisend folgende Schritte:
1) Co-Extrudieren eines mehrschichtigen Materials M1 für mindestens einen mehrlagigen Tank 101 in einer Co-Extrusionsanlage Coex,
2) Formen des mindestens einen mehrlagigen Tanks 101 aus dem mehrschichtigen Material M1 in einem ersten Formwerkzeug F1 der Co-Extrusionsanlage Coex,
3) Bereitstellen (zumindest eines Teils) eines Abfallmaterials A aus dem mehrschichtigen Material M1 der Co-Extrusionsanlage Coex an eine Mono-Extrusionsanlage Mono zum Extrudieren eines einschichtigen Materials M2 für mindestens einen einlagigen Tank 102.

Die mehrlagigen Tanks 101 im Sinne der Erfindung können vorteilhafterweise zur Speicherung von Benzin verwendet werden. Die einlagigen Tanks 102 im Sinne der Erfindung können vorteilhafterweise zur Speicherung von Diesel verwendet werden.

Das Abfallmaterial A entsteht im Sinne der Erfindung durch Zuschneiden, Abtrennen und/oder Abreißen der Kraftstofftanks 100 in oder außerhalb der Formwerkzeuge F1, F2 der Co-Extrusionsanlage Coex und der Mono-Extrusionsanlage Mono, mit oder ohne separate Werkzeuge (bspw. zum Entbutzen), und/oder durch fehlerhafte Tanks F1, F2. Die Formwerkzeuge F1, F2 können in Form von Blasformwerkzeugen bzw. Blaswerkzeugen ausgebildet sein.

Erfindungsgemäß wird im Schritt 3) das Abfallmaterial A aus dem mehrschichtigen Material M1 der Co- Extrusionsanlage Coex zumindest zu einem Teil oder ganz an die Mono-Extrusionsanlage Mono bereitgestellt, um daraus Dieseltanks aus einem bis zu 100% recycelbaren Coextrusions-Regranulat zu fertigen. Dabei ist es lediglich denkbar, dass dem Coextrusions-Regranulat eine geringe Menge an Neumaterial hinzugefügt werden kann.

Das einlagige Material M2 kann dabei Neumaterial und das Abfallmaterial A aus dem mehrschichtigen Material M1 der Co- Extrusionsanlage Coex umfassen. Somit kann der Bedarf an Neumaterial innerhalb der Mono-Extrusionsanlage Mono deutlich reduziert werden.

Ungefähr eine Hälfte des Abfallmaterials A kann bspw. innerhalb der Co-Extrusionsanlage Coex selbst wiederverwendet werden. Die andere Hälfte kann der Mono-Extrusionsanlage Mono zum Herstellen von einlagigen Tanks 102 zugeführt werden.

Denkbar ist es aber auch, dass das meiste oder das ganze Abfallmaterial A aus der Co-Extrusionsanlage Coex in der Mono-Extrusionsanlage Mono zum Herstellen von einlagigen Tanks 102 verarbeitet werden kann.

Die abfallenden Zuschnitte aus dem ersten Formwerkzeug F1 der Co-Extrusionsanlage Coex können somit innerhalb der gemeinsamen Anlage mit der Co-Extrusionsanlage Coex für mehrlagige Tanks 101 und der Mono-Extrusionsanlage Mono für einlagige Tanks 102 vollständig stofflich recycelt werden.

Die Erfindung kann außerdem eine flexible Wiederverwendung des Abfallmaterials A aus der Co-Extrusionsanlage Coex in der Co-Extrusionsanlage Coex selbst und/oder in der Mono-Extrusionsanlage Mono ermöglichen.

In der Mono-Extrusionsanlage Mono kann wiederum der Abfall durch Zuschnitte der einlagigen Tanks 102 in der gleichen Mono-Extrusionsanlage Mono, bspw. über ein Wiederaufbereitungsband, durch Rohrleitungen, durch ein Fördersystem (mechanisch, pneumatisch) und/oder durch Transportfahrzeuge 210, wiederverwendet werden.

Insgesamt betrachtet kann mithilfe der Erfindung die CO2-Bilanz bei der Herstellung von mehrlagigen Tanks 101 und einlagigen Tanks 102 erheblich verbessert werden.

Wie oben bereits erwähnt und wie es die Figur 1 auf der rechten Seite andeutet, kann das mehrschichtige Material M1 im Schritt 1) folgende Schichten aufweist:
a1) eine erste polyethylenhaltige Basisschicht, die insbesondere Polyethylen hoher Dichte aufweist,
a2) eine erste Haftvermittlerschicht, die insbesondere Polyethylen PE, vorzugsweise einen gepfropften Polyethylen, aufweist,
a3) eine Sperrschicht, insbesondere umfassend Ethylen-Vinylalkohol-Copolymer EVOH und/oder Polyamid PA und/oder Polyethylen PE,
a4) eine zweite Haftvermittlerschicht, die insbesondere Polyethylen PE, vorzugsweise einen gepfropften Polyethylen, aufweist, und/oder
a5) eine zweite polyethylenhaltige Basisschicht, die insbesondere Polyethylen hoher Dichte aufweist.

Die äußere Basisschicht, sei es Schicht a1 oder a5, kann weiterhin als eine Dekorschicht dienen und bspw. entsprechend eingefärbt werden.

Die Basisschichten a1, a5 dienen zum Bilden eines stabilen Tankkörpers und können 90 bis 95 Gewichtsprozent des mehrschichtigen Materials M1 betragen.

Die Haftvermittlerschichten a2, a4 können auch als Bindemittelschichten bezeichnet werden. Die Haftvermittlerschichten a2, a4 dienen zur Haftung bzw. Bindung zwischen der jeweiligen Basisschicht a1, a5 und der Sperrschicht a3. Die Haftvermittlerschichten a2, a4 können auch weitere Eigenschaften aufweisen, bspw. um Schereffekte zwischen der jeweiligen Basisschicht a1, a5 und der Sperrschicht a3 zu reduzieren, und/oder um die Viskosität in dem zugeordneten Temperaturbereich der Co-Extrusion, z. B. zwischen 150°C und 230°C, bspw. zwischen 190°C und 220°C, zu stabilisieren. Die Haftvermittlerschichten a2, a4 können bspw. 1 bis 2 Gewichtsprozent des mehrschichtigen Materials M1 ergeben.

Die Sperrschicht a3 kann bspw. auf Basis von Ethylen-Vinylalkohol-Copolymer oder auf Basis von Polyamid ausgebildet sein und dazu dienen, die Emission vom flüchtigen Kohlenwasserstoff aus dem Tank in die Umgebung zu reduzieren. Dier Sperrschicht a3 kann bspw.1 bis 3 Gewichtsprozent des mehrschichtigen Materials M1 ergeben.

Ebenfalls ist es im Rahmen der Erfindung denkbar, dass das mehrschichtige Material M1 nur die Schichten a1 bis a3 aufweisen kann. Hierbei ist es wiederum denkbar, dass die Sperrschicht a3 an einer Innenseite des mehrlagigen Tanks 101 angeordnet werden kann und mit dem Kraftstoff in Kontakt kommen kann.

Die Materialstärke bzw. Dicke des mehrlagigen Tanks 101 und/oder des einlagigen Tanks 102 kann bspw. zwischen 2 mm und 10 mm, vorzugsweise zwischen 3 mm und 6 mm, liegen.

Im Rahmen der Erfindung ist es weiterhin denkbar, dass einem Neumaterial der Schicht a1 und/oder einem Neumaterial der Schicht a5 das Abfallmaterial A aus dem mehrschichtigen Material M1 der Co-Extrusionsanlage Coex beigemischt werden kann.

Wie es zudem die Figur 1 andeutet, kann zwischen der Schicht a1) und der Schicht a2) und/oder zwischen der Schicht a4) und der Schicht a5) mindestens eine weitere Schicht gebildet werden:
a*) eine Coextrusions-Regranulat-Schicht, die insbesondere das Abfallmaterial A aus dem mehrschichtigen Material M1 der Co-Extrusionsanlage Coex aufweist.

Das Abfallmaterial A im Schritt 3) kann, wie oben bereits beschrieben, in Form eines Coextrusions-Regranulats bereitgestellt werden. Hierzu kann das Abfallmaterial A im Schritt 3) ggf. erwärmt und zerkleinert, geschreddert, geschnitten, gerissen, granuliert, gemahlen und/oder durch einen separaten Extrusionsprozess aufbereitet werden. Das Zerkleinern des Abfallmaterials A zum Coextrusions-Regranulat kann bspw. mithilfe einer Pressmaschine mit einem Sieb und/oder mithilfe einer zusätzlichen Extrusionsschnecke erfolgen, die bspw. der Extrusionsschnecke der Co-Extrusionsanlage Coex vorgeschaltet werden kann.

Wie es außerdem die Figur 3 zeigt, kann das Abfallmaterial A im Schritt 3) in einem Auffangbehälter 120 aufbewahrt werden, um nach Bedarf der Co-Extrusionsanlage Coex und/oder der Mono-Extrusionsanlage Mono zugeführt zu werden.

Des Weiteren zeigt die Figur 3, dass das Abfallmaterial A im Schritt 3) auf einem Wiederaufbereitungsband 110, durch Rohrleitungen, durch ein Fördersystem (mechanisch und/oder pneumatisch) und/oder durch Transportfahrzeuge der Co-Extrusionsanlage Coex bereitgestellt werden kann, welches das erste Formwerkzeug F1 am Ausgang und die Co-Extrusionsanlage Coex am Eingang produktionstechnisch verbindet. Auf diese Weise kann die Wiederverwendung des Abfallmaterials A in der Co-Extrusionsanlage Coex ermöglicht werden.

Zudem kann die Erfindung bei einem Verfahren zum Herstellen von Kraftstofftanks vorsehen, dass das Abfallmaterial A im Schritt 3) auf einem Fließband 200, durch Rohrleitungen, durch ein spezielles Fördersystem (mechanisch, pneumatisch) und/oder durch Transportfahrzeuge der Mono-Extrusionsanlage Mono bereitgestellt werden kann, welches die Co-Extrusionsanlage Coex und die Mono-Extrusionsanlage Mono produktionstechnisch verbindet, um insbesondere einen fließenden Herstellungsprozess von mehrlagigen Tanks 101 und einlagigen Tanks 102 zu ermöglichen. Somit kann die Wiederverwendung des Abfallmaterials A aus der Co-Extrusionsanlage Coex in der Mono-Extrusionsanlage Mono sichergestellt werden.

Außerdem kann ein Verfahren im Rahmen der Erfindung mindestens einen von den folgenden Schritten aufweisen:
4) Extrudieren eines einschichtigen Materials M2 für mindestens einen einlagigen Tank 102 in der Mono-Extrusionsanlage Mono, zumindest zu einem Teil oder zu 100 % aus dem Abfallmaterial A, insbesondere in Form eines mehrschichtigen Materials M1, der Co-Extrusionsanlage Coex,
5) Formen des mindestens einen einlagigen Tanks 102 aus dem einschichtigen Material M2 in einem zweiten Formwerkzeug F2 der Mono-Extrusionsanlage Mono, und/oder
6) Wiederverwenden eines Abfallmaterials aus dem einschichtigen Material M2 in der Mono-Extrusionsanlage Mono zum Extrudieren des einschichtigen Materials M2 für den mindestens einen einlagigen Tank 102.

Die Erfindung sieht somit insbesondere eine Verwendung eines Abfallmaterials A aus einem mehrschichtigen Material M1 einer Co-Extrusionsanlage Coex, welches zum Herstellen von mindestens einem mehrlagigen Tank 101 genutzt wird, in einer Mono-Extrusionsanlage Mono zum Extrudieren eines einschichtigen Materials M2, welches zum Herstellen von mindestens einem einlagigen Tank 102 genutzt wird.

Eine entsprechende Anlage 1 zum Herstellen von Kraftstofftanks 100, insbesondere umfassend mehrlagige Tanks 101 und einlagige Tanks 102, die in der Figur 3 gezeigt ist und die speziell dazu ausgeführt ist, ein Verfahren durchzuführen, welches wie oben beschrieben ablaufen kann, stellt ebenfalls einen Aspekt der Erfindung dar.

Die voranstehende Beschreibung der Figur beschreibt die vorliegende Erfindung ausschließlich im Rahmen von Beispielen. Selbstverständlich können einzelne Merkmale der Ausführungsformen, sofern es technisch sinnvoll ist, frei miteinander kombiniert werden, ohne den Rahmen der Erfindung zu verlassen.

### Bezugszeichenliste

- 1: Anlage

- 100: Kraftstofftank
- 101: mehrlagiger Tank
- 102: einlagiger Tank

- 110: Wiederaufbereitungsband
- 120: Auffangbehälter

- 200: Fließband
- 210: Wiederaufbereitungsband

- A: Abfallmaterial

- F1: erstes Formwerkzeug
- F2: zweites Formwerkzeug

- M1: mehrschichtiges Material
- M2: einschichtiges Material

- a1: erste Basisschicht
- a2: erste Haftvermittlerschicht
- a3: Sperrschicht
- a4: zweite Haftvermittlerschicht
- a5: zweite Basisschicht
- a*:

- Coex: Co-Extrusionsanlage
- Mono: Mono-Extrusionsanlage

## Patentansprüche

1. Verfahren zum Herstellen von Kraftstofftanks (100), insbesondere umfassend mehrlagige Tanks (101) und einlagige Tanks (102),
aufweisend folgende Schritte:
1) Co-Extrudieren eines mehrschichtigen Materials (M1) für mindestens einen mehrlagigen Tank (101) in einer Co-Extrusionsanlage (Coex),
2) Formen des mindestens einen mehrlagigen Tanks (101) aus dem mehrschichtigen Material (M1) in einem ersten Formwerkzeug (F1) der Co-Extrusionsanlage (Coex),
3) Bereitstellen eines Abfallmaterials (A) aus dem mehrschichtigen Material (M1) der Co-Extrusionsanlage (Coex) an eine Mono-Extrusionsanlage (Mono) zum Extrudieren eines einschichtigen Materials (M2) für mindestens einen einlagigen Tank (102).

2. Verfahren nach Anspruch 1,
**dadurch gekennzeichnet,**
**dass** im Schritt 1) das mehrschichtige Material (M1) folgende Schichten aufweist:
a1) eine erste polyethylenhaltige Basisschicht, die insbesondere Polyethylen (PE) hoher Dichte aufweist,
a2) eine erste Haftvermittlerschicht, die insbesondere Polyethylen (PE), vorzugsweise einen gepfropften Polyethylen, aufweist,
a3) eine Sperrschicht, insbesondere umfassend Ethylen-Vinylalkohol-Copolymer (EVOH) und/oder Polyamid (PA) und/oder Polyethylen (PE),
a4) eine zweite Haftvermittlerschicht, die insbesondere Polyethylen (PE), vorzugsweise einen gepfropften Polyethylen, aufweist, und/oder
a5) eine zweite polyethylenhaltige Basisschicht, die insbesondere Polyethylen (PE) hoher Dichte aufweist.

3. Verfahren nach Anspruch 2,
**dadurch gekennzeichnet,**
**dass** einem Neumaterial der Schicht a1) und/oder einem Neumaterial der Schicht a5) das Abfallmaterial (A) aus dem mehrschichtigen Material (M1) der Co-Extrusionsanlage (Coex) beigemischt wird.

4. Verfahren nach Anspruch 2 oder 3,
**dadurch gekennzeichnet,**
**dass** zwischen der Schicht a1) und der Schicht a2) und/oder zwischen der Schicht a4) und der Schicht a5) mindestens eine weitere Schicht gebildet wird:
a*) eine Coextrusions-Regranulat-Schicht, die insbesondere das Abfallmaterial (A) aus dem mehrschichtigen Material (M1) der Co-Extrusionsanlage (Coex) aufweist.

5. Verfahren nach einem der vorhergehenden Ansprüche,
**dadurch gekennzeichnet,**
**dass** das Abfallmaterial (A) im Schritt 3) in Form eines Coextrusions-Regranulats bereitgestellt wird,
und/oder dass das Abfallmaterial (A) im Schritt 3) zerkleinert, geschreddert, geschnitten, gerissen, granuliert gemahlen und/oder durch einen separaten Extrusionsprozess aufbereitet wird.

6. Verfahren nach einem der vorhergehenden Ansprüche,
**dadurch gekennzeichnet,**
**dass** das Abfallmaterial (A) im Schritt 3) in einem Auffangbehälter (120) aufbewahrt und nach Bedarf der Co-Extrusionsanlage (Coex) und/oder der Mono-Extrusionsanlage (Mono) zugeführt wird.

7. Verfahren nach einem der vorhergehenden Ansprüche,
**dadurch gekennzeichnet,**
**dass** das Abfallmaterial (A) im Schritt 3) auf einem Wiederaufbereitungsband (110), durch Rohrleitungen, durch ein mechanisches und/oder pneumatisches Fördersystem und/oder durch Transportfahrzeuge der Co-Extrusionsanlage (Coex) bereitgestellt wird.

8. Verfahren nach einem der vorhergehenden Ansprüche,
**dadurch gekennzeichnet,**
**dass** das Abfallmaterial (A) im Schritt 3) auf einem Fließband (200), durch Rohrleitungen, durch ein mechanisches und/oder pneumatisches Fördersystem und/oder Transportfahrzeuge der Mono-Extrusionsanlage (Mono) bereitgestellt wird, welches die Co-Extrusionsanlage (Coex) und die Mono-Extrusionsanlage (Mono) produktionstechnisch verbindet, um insbesondere einen fließenden Herstellungsprozess von mehrlagigen Tanks (101) und einlagigen Tanks (102) zu ermöglichen.

9. Verfahren nach einem der vorhergehenden Ansprüche,
**dadurch gekennzeichnet,**
**dass** das Verfahren mindestens einen von den folgenden Schritten aufweist:
4) Extrudieren eines einschichtigen Materials (M2) für mindestens einen einlagigen Tank (102) in der Mono-Extrusionsanlage (Mono), zumindest zu einem Teil oder zu 100 % aus dem Abfallmaterial (A) der Co-Extrusionsanlage (Coex),
5) Formen des mindestens einen einlagigen Tanks (102) aus dem einschichtigen Material (M2) in einem zweiten Formwerkzeug (F2) der Mono-Extrusionsanlage (Mono), und/oder
6) Wiederverwenden eines Abfallmaterials aus dem einschichtigen Material (M2) in der Mono-Extrusionsanlage (Mono) zum Extrudieren des einschichtigen Materials (M2) für den mindestens einen einlagigen Tank (102).

10. Verwenden eines Abfallmaterials (A) aus einem mehrschichtigen Material (M1) einer Co-Extrusionsanlage (Coex), welches zum Herstellen von mindestens einem mehrlagigen Tank (101) genutzt wird, in einer Mono-Extrusionsanlage (Mono) zum Extrudieren eines einschichtigen Materials (M2), welches zum Herstellen von mindestens einem einlagigen Tank (102) genutzt wird.

11. Anlage (1) zum Herstellen von Kraftstofftanks (100), insbesondere umfassend mehrlagige Tanks (101) und einlagige Tanks (102), aufweisend:
eine Co-Extrusionsanlage (Coex) zum Co-Extrudieren eines mehrschichtigen Materials (M1) für mindestens einen mehrlagigen Tank (101)
und eine Mono-Extrusionsanlage (Mono) zum Extrudieren eines einschichtigen Materials (M2) für mindestens einen einlagigen Tank (102),
wobei die Co-Extrusionsanlage (Coex) und die Mono-Extrusionsanlage (Mono) produktionstechnisch, insbesondere durch ein Fließband (200), Rohrleitungen, ein mechanisches und/oder pneumatisches Fördersystem und/oder Transportfahrzeuge,
miteinander verbunden und derart ausgebildet sind, um ein Verfahren nach einem der vorhergehenden Ansprüche durchzuführen.
